(19) Europäisches Patentamt
European Patent Office
Office européen des brevets

(11) Veröffentlichungsnummer: **0 072 427**
**A1**

(12) # EUROPÄISCHE PATENTANMELDUNG

(21) Anmeldenummer: 82106128.0

(22) Anmeldetag: 08.07.82

(51) Int. Cl.³: **C 02 F 3/08**
**C 02 F 3/30**

(30) Priorität: 18.08.81 DE 3132499

(43) Veröffentlichungstag der Anmeldung:
23.02.83 Patentblatt 83/8

(84) Benannte Vertragsstaaten:
IT

(71) Anmelder: Menzel GmbH. + Co.
Hedelfinger Strasse 95
D-7000 Stuttgart 60(DE)

(72) Erfinder: Zink, Jürgen
Schilfweg 3
D-7000 Stuttgart 70(DE)

(74) Vertreter: Grupe, Peter, Dipl.-Ing.
Patentanwaltsbüro
Tiedtke-Bühling-Kinne-Grupe-Pellmann-Grams
Bavariaring 4
D-8000 München 2(DE)

(54) **Verfahren und Vorrichtung zur Abwasserreinigung.**

(57) Bei diesem Verfahren zur Abwasserreinigung ist zur Erzielung einer hohen Nitrifikationsaktivität in einem Belebungsbecken ein Bewuchskörper vorgesehen, der um eine Achse freidrehend gelagert ist und ausschließlich durch eine Horizontalströmung des Abwassers im Belebungsbecken getrieben wird. Der horizontalströmungsgetriebene Bewuchskörper ist so ausgeführt, daß eine Nitrifikanten aufweisende Biomasse an seinen Flächen haftet und sich vermehren kann. Die Biomasse wird aufgrund der horizontalströmungsgetriebenen Freidrehung des Bewuchskörpers aus dem Abwasser herausgehoben und kontaktiert während dieser Phase außerhalb des Abwassers mit Gas bzw. Sauerstoff. Durch die horizontalströmungsgetriebene Weiterdrehung des Bewuchskörpers taucht die Biomasse erneut zur Behandlung des Abwassers in letzteres ein.

EP 0 072 427 A1

TIEDTKE - BÜHLING - KINNE
GRUPE - PELLMANN - GRAMS

Patentanwälte
Vertreter beim EPA
Dipl.-Ing. H. Tiedtke
Dipl.-Chem G Buhling
Dipl.-Ing. R. Kinne
Dipl.-Ing. P. Grupe
Dipl.-Ing. B. Pellmann
Dipl.-Ing. K. Grams

Bavariaring 4, Postfach 20 24 C:
8000 München 2
Tel.: 0 89 - 53 96 53
Telex: 5-24 845 tipat
cable: Germaniapatent Müncher

0072427

8. Juli 1982

EP 2313

Menzel GmbH & Co.
7000 Stuttgart 60

## Verfahren und Vorrichtung zur Abwasserreinigung

Die Erfindung betrifft ein Verfahren zur Abwasserreinigung und eine Vorrichtung zur Durchführung des Verfahrens.

Bei Abwasserkläranlagen ist es bekannt, das Abwasser zur teilweisen oder vollständigen Nitrifikation in sogenannten Schwachlastanlagen aufzubereiten. In solchen Schwachlastanlagen ist ein verhältnismäßig hohes Schlammalter des Belebtschlamms zu erzielen, da eine nur geringe Schlammbelastung auftritt. Die Nitrifikanten haben somit aufgrund längerer Verweilzeit die Möglichkeit einer ausreichenden Vermehrung. Da der Nitrifikationsprozeß bzw. die Nitrifikationsgeschwindigkeit stark temperaturabhängig ist, ist es insbesondere im Winter bei niedrigen Außen- und Abwassertemperaturen zur Erreichung einer ausreichenden Nitrifikation notwendig, die Verweilzeiten entsprechend zu verlängern. Demgemäß muß für einen ausreichenden Abwasserdurchsatz die Abwasserreinigungsanlage entsprechend groß konzipiert sein, was bedeutet, daß nicht nur hohe Investitionskosten für die Herstellung der Kläranlage erforderlich sind, sondern auch hohe Betriebskosten zur Nitrifikationsdurchführung aufgebracht werden müssen. Es sind zwar zur Reinigung von Abwasser auch sogenannte

Hochlastanlagen bekannt, die wesentlich kleiner ausgeführt werden können, doch ist in diesen die Verweilzeit des Abwassers ausgesprochen kurz, weshalb praktisch keine Nitrifikation stattfinden kann.

Der Erfindung liegt demgemäß die Aufgabe zugrunde, ein Verfahren zur Abwasserreinigung so auszuführen, daß bei kleiner Beckenausführung eine hohe Nitrifikationsleistung mit einfachen Mitteln ohne zusätzliche Antriebsbewegung kostensparend durchgeführt werden kann.

Diese Aufgabe wird erfindungsgemäß dadurch gelöst, daß in einem Belebungsbecken ein Bewuchskörper um eine Achse freidrehend und ausschließlich durch eine Horizontalströmung des Abwassers getrieben wird, wobei eine am Bewuchskörper anhaftende Biomasse durch die horizontalströmungsgetriebene Freidrehung des Bewuchskörpers aus dem Abwasser herausgehoben wird, hier Gas, insbesondere Sauerstoff aufnimmt und durch die horizontalströmungsgetriebene Weiterdrehung des Bewuchskörpers erneut zur Behandlung des Abwassers in letzteres eintaucht.

Bevorzugte Ausgestaltungen und Weiterbildungen der Erfindung sowie weitere Vorteile und Einzelheiten sind den Merkmalen der Unteransprüche und der nachfolgenden Beschreibung zu entnehmen.

Mit dem erfindungsgemäßen Verfahren wird eine Leistungssteigerung und Verbesserung des Nitrifikationsprozesses im Belebungsbecken auf einfache Weise erzielt, da lediglich bei einer Horizontalströmung des Abwassers im Belebungsbecken ein freidrehender Bewuchskörper ohne eigenen bzw. zusätzlichen Antrieb vorzusehen ist. Der Bewuchskörper dreht sich allein aufgrund der Horizontalströmung des Abwassers und benötigt keinerlei Kraftzuleitungen für seinen Antrieb wie z.B. eine Elektro-
oder etwa Druckluftzuführung für einen Luftblasenauftriebsantrieb des rotierbar gelagerten Bewuchskörpers.
Es ist somit möglich, ohne großen Aufwand aufgrund der
am Bewuchskörper anhaftenden susätzlichen Nitrifikanten
eine erhebliche Leistungssteigerung auch in einem kleinen Belebungsbecken zu erzielen, weshalb sich das erfindungsgemäße Verfahren auch besonders vorteilhaft für
Sanierungsmaßnahmen bei bereits bestehenden Abwasser-
Kläranlagen zur Erhöhung des Wirkungsgrades eignet. Da
der Bewuchskörper frei in der Wasserströmung mitläuft,
sind auch keine besonderen Antriebswartungsarbeiten erforderlich, so daß ein ausgesprochen kostengünstiger
Dauerbetrieb möglich ist. Die am Bewuchskörper anhaftenden
und im Abwasser weitgehend abriebfrei bewegten Nitrifikanten sind im wesentlichen sogenannte sessile Bakterien,
die sich an der Oberfläche des Bewuchskörpers ansiedeln
und vermehren können, wozu die Sauerstoffanreicherung
während der Drehphase außerhalb des Abwassers wesentlich
beiträgt.

Eine bevorzugte Vorrichtung zur Durchführung des Verfahrens kann erfindungsgemäß so ausgeführt sein, daß der
mit der Biomasse behaftete freidrehende Bewuchskörper im
wesentlichen aus Scheibensegmenten gebildet ist, die auf
die Drehachse des Bewuchskörpers aufgesetzt bzw. von
dieser durchsetzt sind. Dabei ist es zur Erzielung einer
großen Oberfläche für die Biomassenanhaftung günstig, die
Scheibensegmente so anzuordnen bzw. auszubilden, daß sie
auf Abstand zueinander angeordnet sind und zwischen ihren
einander zugewandten Breitseiten jeweils entsprechende
Spalte ausgebildet sind, so daß sich die Nitrifikanten
an den Breitseiten der Scheibensegmente ansiedeln und vermehren können. Zur weiteren Erhöhung der Biomassenhaftfläche kann es günstig sein, die Seiten der Scheibensegmente mit einer solchen Oberflächenstruktur zu
versehen, die Vertiefungen und Erhöhungen aufweist. Diese
Vertiefungen und Erhöhungen können sowohl regelmäßig als
auch unregelmäßig an den Scheibensegmenten ausgebildet
sein.

Vorteilhaft kann der mit Biomasse behaftete Bewuchskörper in einem runden Belebungsbecken angeordnet sein. In
einem solchen Rundbecken ist eine weitgehend verlustarme
horizontale Kreisströmung zu erzielen, da hier praktisch
keine toten Winkel oder Vorsprünge die Horizontalströmung beeinträchtigen. Die Horizontalströmung des Abwassers
im Belebungsbecken kann durch       einen mechanischen
Wasserverdränger erzielt werden, der in bevorzugter Ausführung als Propeller ausgebildet ist, über den das Abwasser weitgehend linear und wirbelarm in horizontaler
Richtung bewegt wird. Über den Propeller ist es zudem
möglich, die Geschwindigkeit der Horizontalströmung zu
variieren. Weiterhin kann es vorteilhaft sein, zur Aktivierung eines weiteren Belebtschlamms im Abwasser des
Belebungsbeckens eine Luft- bzw. Reinsauerstoffbegasung
durchzuführen. Eine solche Sauerstoffbegasung des Belebtschlamms bzw. des Abwassers kann sowohl vor als auch
hinter dem Propeller für die Horizontalströmung erfolgen,
wobei es zweckmäßig sein dürfte, sowohl den Propeller
als auch die Sauerstoffbegasung auf Abstand zu dem mit
Biomasse behafteten und horizontalströmungsgetriebenen
Bewuchskörper im Belebungsbecken anzuordnen. Für den
Sauerstoffeintrag kann ein dem Propeller zugeordnetes
Begasungsaggregat besonders geeignet sein, das mittels
Abscherung unmittelbar am Begasungsporen-Luftaustritt
feinste Luftblasen erzeugt.

Das Feinstluftblasen erzeugende Begasungsaggregat kann zweckmäßig an der Druckseite des Propellers im Abwasser vorgesehen werden, wodurch allein schon durch die vom Propeller erzeugte Strömung eine gute Abscherung der Feinstluftblasen von dem zum Beispiel als scheibenförmiger Drehbelüfter ausgeführten Begasungsaggregat erzielt wird. Darüber hinaus kann es günstig sein, den mit Biomasse behafteten Bewuchskörper und das Begasungsaggregat im runden Belebungsbecken so anzuordnen, daß sie sich etwa radial einander gegenüberliegend befinden, so daß im wesentlichen große Abstandsbereiche zwischen beiden Teilen auch zum Zwecke eines Vollzugs entsprechender Abwasserbehandlungsprozesse gegeben sind. Vorteilhaft ist dabei der untere Teil des frei rotierenden, mit Biomasse behafteten Bewuchskörpers etwa in der Ebene angeordnet, in der sich auch die Mittenachse des Propellers befindet, so daß hier weitgehend übereinstimmende Tiefenanordnungen im Abwasser gegeben sind.

Der mit der Biomasse behaftete und horizontalströmungsgetriebene Bewuchskörper, dessen Scheibensegmente aus Kunststoff bestehen können, kann zweckmäßig im Belebungsbecken so gelagert sein, daß sich seine Drehachse etwas über dem Wasserspiegel des Abwassers befindet. Hierbei ist die Kontaktphase der Biomasse am Bewuchskörper im Bereich über dem Abwasser zur Sauerstoffaufnahme etwas größer als die Kontaktphase der Biomasse während des Eintauch- und Behandlungsvorganges im Abwasser. Dabei ist die weitere vorteilhafte Anordnung gegeben, daß für die horizontalströmungsgetriebene Freidrehung des mit der Biomasse behafteten Bewuchskörpers etwas weniger als ein Viertel des Bewuchskörperumfangs für den Angriff der Horizontalströmung zum Antrieb des Bewuchskörpers zur Verfügung steht.

Bei dem erfindungsgemäßen Verfahren kann es insbesondere vorteilhaft sein, die Begasung des Belebtschlamms bzw. des Abwassers im Belebungsbecken beispielsweise durch Ein- oder Ausschaltung intermittierend durchzuführen, so daß sowohl ein Nitrifikationsprozeß als auch ein Denitrifikationsprozeß im Belebungsbecken erfolgen kann. Hierbei ist eine optimale Nutzung der Nitrifikanten möglich. Es ist nämlich der besondere Vorteil gegeben, daß die am frei rotierenden Bewuchskörper anhaftenden Nitrifikanten auch während der ganzen Zeit der Denitrifikationsphase im Belebungsbecken nitrifizieren können, so daß bei einer vorgegebenen Nitrifikationsrate die geringst-mögliche Bewuchskörperfläche ausreicht. Für den intermittierenden Begasungsbetrieb zur Nitrifikation und Denitrifikation kann es sehr vorteilhaft sein, das Begasungsaggregat beispielsweise über eine entsprechende Hubvorrichtung so zu lagern bzw. anzuordnen, daß das Begasungsaggregat wahlweise in das Abwasser eingetaucht bzw. aus diesem herausgehoben werden kann.

Es soll noch darauf hingewiesen werden, daß es auch im Rahmen des Schutzumfangs liegt, entsprechende Varianten des erfindungsgemäßen Verfahrens bei weiteren biochemischen Prozessen anzuwenden, bei denen dem Substrat ein Gas zugegeben wird und vorwiegend sessile Organismen im Reaktionsprozeß mitwirken. So kann das erfindungsgemäße Verfahren z.B. bei der Schlammfaulung unter Methangasbildung vorgesehen werden. Darüber hinaus ist es möglich, das Verfahren gemäß der Erfindung z.B. bei einer Nährstofferzeugung anzuwenden, wobei am Bewuchskörper entsprechend anhaftende Algen vorgesehen werden können.

# Tiedtke – Bühling – Kinne
## Grupe – Pellmann – Grams

Pate 0072427

Vertreter beim EPA
Dipl.-Ing H Tiedtke
Dipl.-Chem. G Buhling
Dipl.-Ing. R. Kinne
Dipl.-Ing. P. Grupe
Dipl.-Ing. B. Pellmann
Dipl.-Ing. K. Grams

Bavariaring 4, Postfach 20 24 03
8000 München 2
Tel.: 0 89 - 53 96 53
Telex: 5-24 845 tipat
cable: Germaniapatent München

8. Juli 1982

EP 2313

- 7 -

## Patentansprüche

1. Verfahren zur Abwasserreinigung, dadurch gekennzeichnet, daß in einem Belebungsbecken ein Bewuchskörper um eine Achse frei-drehend und ausschließlich durch eine Horizontalströmung des Abwassers getrieben wird, wobei eine am Bewuchskörper anhaftende Biomasse durch die horizontalströmungsgetriebene Freidrehung des Bewuchskörpers aus dem Abwasser herausgehoben wird, hier Gas, insbesond. Sauerstoff aufnimmt und durch die horizontalströmungsgetriebene Weiterdrehung des Bewuchskörpers erneut zur Behandlung des Abwassers in letzteres eintaucht.

2. Verfahren nach vorstehendem Anspruch, dadurch gekennzeichnet, daß die Kontaktphase bzw. der Umfangsflächenanteil der Biomasse am Bewuchskörper über dem Abwasser zur Sauerstoffaufnahme gleich oder größer ist als die Kontaktphase der am Bewuchskörper anhaftenden Biomasse im Abwassereintauchbereich.

3. Verfahren nach einem der vorstehenden Ansprüche, dadurch gekennzeichnet, daß die horizontalströmungsgetriebene Freidrehung des mit Biomasse behafteten Bewuchskörpers durch ein Viertel oder etwas weniger des der Horizontalströmung zugewandten Bewuchskörperumfangs erfolgt.

4. Verfahren nach einem der vorstehenden Ansprüche, dadurch gekennzeichnet, daß zur Unterstützung der Abwasserbehandlung über den mit Biomasse behafteten, horizontalströmungsgetriebenen Bewuchskörper eine Luft- bzw. Reinsauerstoffbegasung zur Aktivierung eines Nitrifikanten beinhaltenden Belebtschlamms im Abwasser erfolgt.

5. Verfahren nach einem der vorstehenden Ansprüche, dadurch gekennzeichnet, daß die Sauerstoffbegasung des Belebtschlamms im Bereich vor bzw. hinter einem die Horizontalströmung des Abwassers erzeugenden mechanischen Wasserverdränger auf Abstand zum biomassebehafteten und horizontalströmungsgetriebenen Bewuchskörper durchgeführt wird.

6. Verfahren nach einem der vorstehenden Ansprüche, dadurch gekennzeichnet, daß die Horizontalströmung des Abwassers zum freidrehenden Antrieb des mit Biomasse behafteten Bewuchskörpers im Belebungsbecken im wesentlichen als eine um eine vertikale Achse sich drehende Kreisströmung betrieben wird.

7. Vorrichtung zur Durchführung des Verfahrens nach Anspruch 1, dadurch gekennzeichnet, daß der mit Biomasse behaftete freidrehende Bewuchskörper von seiner Drehachse durchsetzte Scheibensegmente aufweist, die zur Bildung von Spalten zwischen ihren einander zugewandten Breitseiten auf Abstand zueinander angeordnet sind.

8. Vorrichtung nach vorstehendem Anspruch, dadurch ge-

kennzeichnet, daß mindestens die Breitseiten der Scheibensegmente des Bewuchskörpers zur großflächigen Biomassenanreicherung eine Vertiefungen und Erhöhungen aufweisende Oberflächenstruktur besitzen.

9. Vorrichtung nach einem der vorstehenden Ansprüche, dadurch gekennzeichnet, daß der die Horizontalströmung des Abwassers im Belebungsbecken erzeugende mechanische Wasserverdränger als Propeller ausgebildet ist.

10. Vorrichtung nach einem der vorstehenden Ansprüche, dadurch gekennzeichnet, daß dem Propeller für die Horizontalströmung im Belebungsbecken ein mittels Abscherung feinstluftblasenerzeugendes Begasungsaggregat zugeordnet ist.

11. Vorrichtung nach einem der vorstehenden Ansprüche, dadurch gekennzeichnet, daß das den mit Biomasse behafteten horizontalströmungsgetriebenen Bewuchskörper, den Propeller und das Begasungsaggregat beinhaltende Belebungsbecken für eine verlustarme horizontale Kreisströmung als Rundbecken ausgeführt ist.

12. Vorrichtung nach einem der vorstehenden Ansprüche, dadurch gekennzeichnet, daß der untere Teil des freirotierenden, mit Biomasse behafteten Bewuchskörpers und die Strömungsachse des Propellers etwa in der gleichen Horizontalebene im Belebungsbecken angeordnet sind.

13. Vorrichtung nach einem der vorstehenden Ansprüche, dadurch gekennzeichnet, daß der mit Biomasse behaftete, freidrehende Bewuchskörper und das Begasungsaggregat im runden Belebungsbecken etwa radial einander gegenüberliegend angeordnet sind.

14. Vorrichtung nach einem der vorstehenden Ansprüche, dadurch gekennzeichnet, daß das dem Propeller zugeordnete Begasungsaggregat im Abwasser zu dessen intermittierender Belüftung ein- und abschaltbar ausgebildet ist.

15. Vorrichtung nach einem der vorstehenden Ansprüche, dadurch gekennzeichnet, daß das Begasungsaggregat im Belebungsbecken aus dem Abwasser zu dessen intermittierender Belüftung eintauchbar und heraushebbar angeordnet ist.

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 721 723 (AUTOTROL) <br><br> * Seite 8, Absatz 2 - Seite 9, Absatz 3; Seite 13, Zeile 22 - Seite 14, Absatz 1; Seite 2, Anspruch 5 * <br><br> --- | 1,2,4, 7,8 | C 02 F 3/08 <br> C 02 F 3/30 |
| X | GB-A- 930 226 (H. HARTMANN) <br> * Seite 2, Zeilen 70-78; Seite 1, Zeile 55 - Seite 2, Zeile 19 * <br><br> --- | 1,2,7 | |
| A | DE-A-1 784 501 (H. DOMZIG) <br><br> * Seite 13, Anspruch 10; Seite 2, letzter Absatz - Seite 4, Absatz 1 * <br><br> --- | 5,6,9, 10,11, 14 | |
| A | DE-A-2 909 724 (STEINMANN + ITTIG) <br> * Seite 1, Ansprüche 1,2 * <br><br> ----- | 15 | **RECHERCHIERTE SACHGEBIETE (Int. Cl. ³)** <br><br> C 02 F |

Der vorliegende Recherchenbericht wurde für alle Patentansprüche erstellt.

| Recherchenort | Abschlußdatum der Recherche | Prüfer |
|---|---|---|
| DEN HAAG | 07-10-1982 | TEPLY J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsatze

E : älteres Patentdokument, das jedoch erst am oder nach dem Anmeldedatum veröffentlicht worden ist
D : in der Anmeldung angeführtes Dokument
L : aus andern Grunden angeführtes Dokument

& : Mitglied der gleichen Patentfamilie, übereinstimmendes Dokument

EPA Form 1503 03 82